# EUROPEAN PATENT APPLICATION

(11) **EP 3 534 252 A1**
(43) Date of publication of application: **04.09.2019**
(21) Application number: 18159653.7
(22) Date of filing: 02.03.2018
(51) Int. Cl.: G06F 8/41, G06F 8/60, G06F 8/61

(54) **METHOD AND SYSTEM FOR PROVIDING A PROCESSING DEVICE WITH EXECUTABLE MACHINE CODE**

(71) Applicant: NXP B.V., 5656 AG Eindhoven (NL)
(72) Inventor: LEMSITZER, Stefan, 5656 AG Eindhoven (NL); FREY, Alexandre, 5656 AG Eindhoven (NL); RAUTER, Tobias, 5656 AG Eindhoven (NL)
(74) Representative: Krott, Michel

(57) **Abstract**

In accordance with a first aspect of the present disclosure, a method is conceived for providing a processing device with executable machine code, comprising: (a) converting one or more Java class files into at least one first converted applet, CAP, file; (b) converting the first CAP file into a functionally equivalent intermediate code and associated metadata; (c) compiling the intermediate code to a processing device-dependent machine code; (d) packing said processing device-dependent machine code and said associated metadata into a second CAP file; (e) loading said second CAP file into the processing device. In accordance with a second aspect of the present disclosure, a corresponding system is provided. In accordance with a third aspect of the present disclosure, a corresponding computer program is provided.

## Description

### OVERVIEW

The present disclosure relates to a method for providing a processing device with executable machine code. Furthermore, the present disclosure relates to a corresponding system for providing a processing device with executable machine code. Due to the physically and logically exposed nature of networked devices, such as smart cards and Internet of Things (IoT) devices, the integration of a hardware-backed trusted execution environment that protects systems from being compromised by attackers with physical access is important. While hardware-only solutions merely provide specific functionality that cannot be changed, other solutions such as smart cards or secure elements provide the possibility of configuration changes by installing and executing different software components on them. For these types of devices, Java Card™ is often used to increase portability and to reduce the number of possible implementation-related security-relevant bugs.

### SUMMARY

In accordance with a first aspect of the present disclosure, a method is conceived for providing a processing device with executable machine code, comprising: (a) converting one or more Java class files into at least one first converted applet (CAP) file; (b) converting the first CAP file into a functionally equivalent intermediate code and associated metadata; (c) compiling the intermediate code to a processing device-dependent machine code; (d) packing said processing device-dependent machine code and said associated metadata into a second CAP file; (e) loading said second CAP file into the processing device.

In an embodiment, step (b) comprises identifying local variables using bytecodes and original metadata comprised in the first CAP file, and mapping said local variables to variables of said intermediate code.

In an embodiment, step (b) comprises mapping single bytecodes or multiple bytecodes to one or more instructions of said intermediate code.

In an embodiment, the intermediate code comprises C code.

In an embodiment, the intermediate code comprises LLVM intermediate representation (LLVM IR) code.

In an embodiment, steps (a) to (d) are performed by a modified Java Card converter.

In an embodiment, step (e) is performed by a Java Card installer.

In an embodiment, the processing device is at least one of a smart card, a secure element, and an Internet of Things device.

In accordance with a second aspect of the present disclosure, a system is provided for providing a processing device with executable machine code, said system comprising a preloading unit and a loading unit, wherein the preloading unit is configured to: convert one or more Java class files into at least one first converted applet, CAP, file; convert the first CAP file into a functionally equivalent intermediate code and associated metadata; compile the intermediate code to a processing device-dependent machine code; pack said processing device-dependent machine code and said associated metadata into a second CAP file; and wherein the loading unit is configured to load said second CAP file into the processing device.

In an embodiment, converting the first CAP file into the intermediate code comprises identifying local variables using bytecodes and original metadata comprised in the first CAP file, and mapping said local variables to variables of said intermediate code.

In an embodiment, converting the first CAP file into the intermediate code comprises mapping single bytecodes or multiple bytecodes to one or more instructions of said intermediate code.

In an embodiment, the preloading unit is a modified Java Card converter, and the loading unit is a Java Card installer.

In an embodiment, the system further comprises the processing device, wherein the processing device is configured to execute a selected application and handle calls between bytecodes comprised in the first CAP file and said machine code transparently.

In accordance with a third aspect of the present disclosure, a computer program is provided, comprising executable instructions that, when executed by a processing unit, perform a method of the kind set forth.

In an embodiment, a non-transitory computer-readable medium comprises a computer program of the kind set forth.

### DESCRIPTION OF DRAWINGS

Embodiments will be described in more detail with reference to the appended drawings, in which:
Fig. 1 shows an example of a Java Card virtual machine;
Fig. 2 shows an example of a Java Card converter;
Fig. 3 shows an illustrative embodiment of a method for providing a processing device with executable machine code;
Fig. 4 shows an illustrative embodiment of a system for providing a processing device with executable machine code;
Fig. 5 shows an example of a system for hosting instructions that enable a processing device to carry out functions.

### DESCRIPTION OF EMBODIMENTS

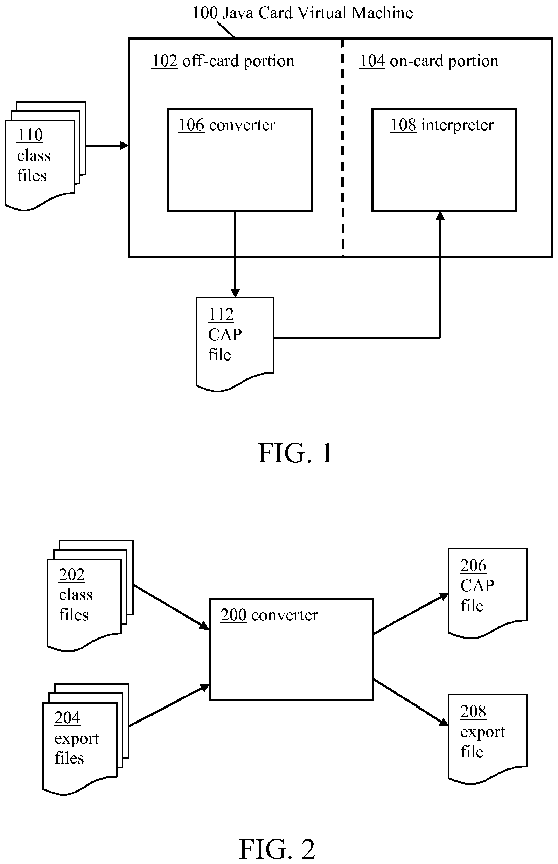

Fig. 1 shows an example of a Java Card virtual machine 100. The Java Card virtual machine 100 comprises an off-card portion 102 and an on-card portion 104. The off-card portion 106 comprises a Java Card converter 106 that is configured to convert one or more Java class files 110 to a converted applet (CAP) file 112. The CAP file 112 may be loaded into a processing device, such as a smart card, a secure element or an IoT device. It is noted that the terms "off-card portion" and "on-card portion" refer to execution environments outside and inside said processing device, respectively. The on-card portion 104 comprises a Java Card interpreter 108 that is configured to execute the CAP file 112. A Java Card virtual machine 100 of this kind has been described in the book "Java Card™ Technology for Smart Cards: Architecture and Programmer's Guide", written by Zhiqun Chen and published in the Addison-Wesley Java Series by Addison-Wesley Professional, 2000.

More specifically, a Java Card virtual machine (JCVM) differs from a Java virtual machine (JVM) in that the JCVM is implemented as two separate portions 102, 104. The on-card portion 104 is implemented on the processing device that executes a given application (applet); this on-card portion 104 includes the Java Card bytecode interpreter 108. The Java Card converter 106 runs in an off-card portion 102 of the JVCM, for example on a personal computer (PC) or a workstation. Together, the converter 106 and the interpreter 108 implement all the virtual machine functions, i.e. loading Java class files and executing them. The converter 106 is configured to load and preprocess the Java class files 110 that constitute a Java package and to output a CAP file 112. Subsequently, the CAP file 112 may be loaded into the processing device and executed by the interpreter 108. In addition to creating the CAP file 112, the converter 106 may generate an export file (not shown) that represents the public application programming interfaces (APIs) of the converted package. Furthermore, the converter 106 may detect any unsupported language features used in the applet: since Java Card technology supports a subset of the Java language, some features may lack support.

Applets are developed in a Java™ programming environment. The compilation of a Java applet produces one or more class files. All class files of a package are processed by the converter 106. The converter 106 validates the code and generates the CAP file 112. The CAP file 112 may be regarded as an equivalent of a Java package for the Java Card platform. The CAP file 112 contains an executable binary representation of the classes of a package. A package is a namespace within the Java programming language; it may contain classes and interfaces. In the context of Java Card technology, a package defines either a user library, or one or more applets.

Java Card technology uses two binary file formats: the CAP file format and the export file format. As mentioned above, a CAP file contains an executable binary representation of the classes of a package. The Java Archive (JAR) file format is used as the container format for CAP files. A JAR is a package file format that is typically used to aggregate many Java class files and associated metadata and resources into one file for distribution. More specifically, a CAP file is a JAR file that contains a set of components, each stored as an individual file in the JAR file. Each component describes an aspect of the CAP file contents, such as class information, executable bytecodes, linking information, and verification information. Thus, a CAP file contains both executable bytecodes and metadata (class information, linking information, verification information). The CAP file format is optimized for a small footprint. It is the form in which software is loaded into a processing device. Export files are not loaded into the processing device; they are produced and used only by the converter for verification and linking purposes. Export files contain public API information for an entire package of classes. Furthermore, export files contain linking information that may be used for resolving inter-package references on the processing device.

**Fig.** 2 shows an example of a Java Card converter 200. The converter 200 is configured to process one or more class files 202 and one or more export files 204, and to output a CAP file 206 and an export file 208. In contrast to the Java virtual machine, which processes one class at a time, a Java Card converter processes one package at a time. A Java compiler compiles source code to class files. The Java Card converter 200 preprocesses the class files that constitute a package and converts said package to the CAP file 206. During this conversion, the converter 200 performs several tasks that a Java virtual machine would perform when classes are loaded, such as load image verification, checks for language subset violations, initialization of static variables, and bytecode optimization. In operation, the converter 200 loads all classes in a Java package. If said package imports classes from other packages, the converter 200 loads the export files 204 of these packages too. The converter 200 outputs the CAP file 206 and an export file 208 for the package itself, which may be used for subsequent conversions of other packages.

As mentioned above, Java Card technology is often used to increase portability and to reduce the number of possible implementation-related security-relevant bugs. However, using Java Card technology in resource-constrained devices may have a negative performance impact. For example, using a Java Card virtual machine in the IoT domain has reportedly a performance drawback of about 14 to 230 times. At the same time, techniques that aim at solving these performance problems, such as Ahead of Time (AoT) compiling, often drastically increase the code size of executables. This, in turn, results in increased usage of memory and processing resources, which is undesirable, particularly in resource-constrained devices.

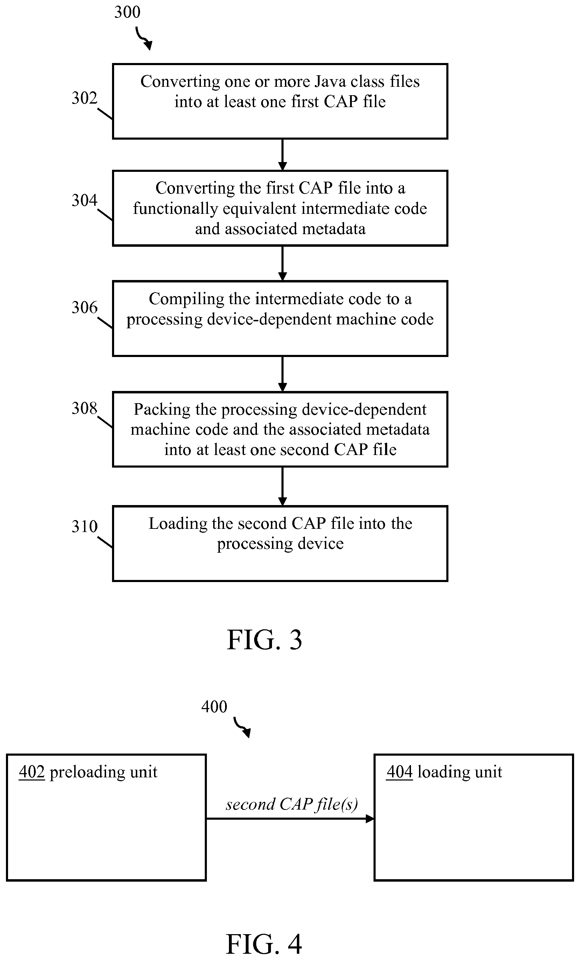

**Fig.** 3 shows an illustrative embodiment of a method 300 for providing a processing device with executable machine code. In accordance with the present disclosure, the method 300 comprises the following steps. At 302, one or more Java class files are converted into at least one first CAP file. Then, at 304, the first CAP file is converted into a functionally equivalent intermediate code and associated metadata. Thus, the original metadata contained in the first CAP file are converted to new metadata. Furthermore, the metadata contained in the first CAP file may be used for the conversion of Java Card bytecode, which is contained in said first CAP file, into said functionally equivalent intermediate code. In particular, as mentioned below, local variables may be identified by means of said original metadata, so that these local variables can be mapped to variables of the intermediate code. Then, at 306, the intermediate code is compiled to a processing device-dependent machine code. Then, at 308, the processing device-dependent machine code and the associated metadata are packed into a second CAP file. Finally, at 310, the second CAP file is loaded into the processing device.

In this way, it becomes possible to load native code and/or Java Card bytecode and describe their interfaces with the same approach (i.e., using CAP file metadata). This, in turn, reduces the above-mentioned negative performance impact without drastically increasing the code size of executables. More specifically, the processing device may execute a selected application and handle calls between the different types of code (native code and Java Card bytecode) transparently. For example, a call from the selected application will trigger the execution of the portion of the native code that represents the called method. More generally speaking, it can thus be said that the presently disclosed method and system improve the performance of a processing device, computing device or computer.

It is noted that the term "native code" refers to a representation of a program that is directly read, understood and interpreted by the executing hardware (i.e., a CPU). In this context, the native code is the processing device-dependent machine code. Furthermore, it is noted that the term "Java Card bytecode" refers to a representation of a program that is understood by the JCVM. Similar to the machine code it comprises a set of instructions, but these instructions are read and interpreted by the JCVM, which then handles the execution of the Java Card bytecode. The term "bytecode" as used herein may refer to the representation of the whole program, or to the representation of a part of a program.

In particular, the step of converting the first CAP file into a functionally equivalent intermediate code generates basic structures (classes, interfaces, virtual method tables, globals, etc.) based on the first CAP file. In an embodiment, said step comprises identifying local variables using bytecodes and metadata comprised in the first CAP file, and mapping said local variables to variables of said intermediate code. In this way, often occurring problems when converting Java bytecode to machine code, such as conversion from stack machine to register machine, as well as the optimization from consecutive simple bytecodes to less more complex native instructions, are handled implicitly by the compiler of the intermediate code. Furthermore, in an embodiment, said step comprises mapping single bytecodes or multiple bytecodes to one or more instructions of said intermediate code. This results in a practical and efficient conversion method, and facilitates generating an intermediate code that is functionally equivalent to the code contained in the first CAP file.

In a practical and efficient implementation, steps 302 to 308 are performed by a modified Java Card converter. For example, a Java Card converter may be modified in the sense that it is provided with a computer program comprising instructions for performing the steps 302 to 308. Furthermore, in a practical and efficient implementation, step 310 is performed by a Java Card installer. In Java Card technology, the functions of downloading and installing CAP files are performed by a unit referred to as the installer. Such an installer can be used to perform step 310. For this purpose, the installer may also be equipped with a computer program.

Furthermore, in an embodiment, the intermediate code comprises C code. Alternatively, or in addition, the intermediate code may comprise Low Level Virtual Machine (LLVM) intermediate representation (LLVM IR) code. Both types of code are particularly suitable for generating a functionally equivalent intermediate code. The LLVM IR is a code representation specified by the LLVM Compiler Infrastructure Project. The LLVM Project is a collection of modular and reusable compiler and toolchain technologies. More information on the LLVM Project can be found on the project website: https://llvm.org/.

**Fig.** 4 shows an illustrative embodiment of a system 400 for providing a processing device with executable machine code. The system 400 comprises a preloading unit 402 and a loading unit 404. The preloading unit 402 is configured to convert one or more Java class files into at least one first CAP file, convert the first CAP file into a functionally equivalent intermediate code and associated metadata, compile the intermediate code to a processing device-dependent machine code, and pack said processing device-dependent machine code and said associated metadata into a second CAP file. The loading unit 404 is configured to load said second CAP file into the processing device.

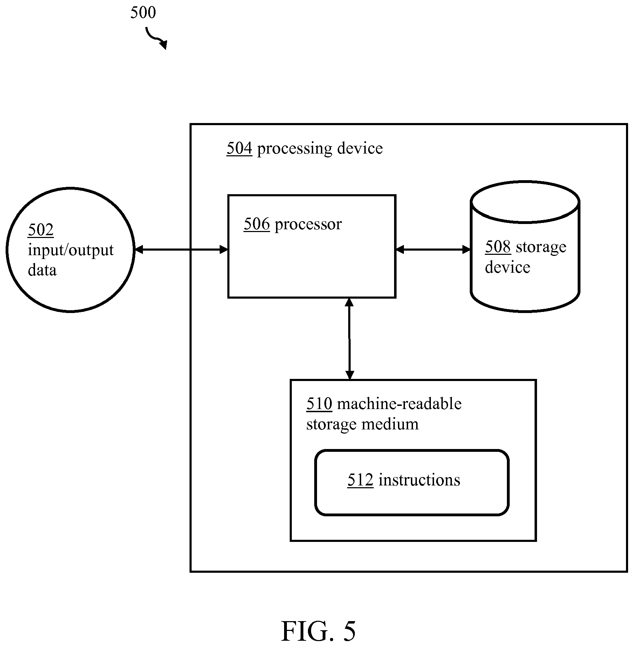

**Fig. 5** shows an example of a system 500 for hosting instructions that enable a processing device 504 to carry out functions. The processing device 504 is an example of a processing device whose performance can be increased using the presently disclosed method and system. The above-mentioned second CAP file can be loaded into a non-transient machine-readable storage medium 510 of the processing device 504. The second CAP file contains, *inter alia,* executable instructions 512. Said instructions 512 may control how a processor 506 of the processing device 504 receives input data 502 and transforms the input data into output data 502, using data within a storage device 508 of the processing device 504. The machine-readable storage medium 510 in an alternate example embodiment is a non-transitory computer-readable storage medium.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means maybe embodied by one and the same item of hardware. The mere fact that certain measures are recited in mutually different dependent claims does not indicate that a combination of these measures cannot be used to advantage.

### LIST OF REFERENCE SIGNS

- 100: Java Card virtual machine
- 102: off-card portion
- 104: on-card portion
- 106: converter
- 108: interpreter
- 110: class files
- 112: CAP file
- 200: converter
- 202: class files
- 204: export files
- 206: CAP file
- 208: export file
- 300: method for providing a processing device with executable machine code
- 302: converting one or more Java class files into at least one first CAP file
- 304: converting the first CAP file into a functionally equivalent intermediate code and associated metadata
- 306: compiling the intermediate code to a processing device-specific machine code
- 308: packing the processing device-specific machine code and the associated metadata into at least one second CAP file
- 310: loading the second CAP file to the processing device
- 400: system for providing a processing device with executable machine code
- 402: preloading unit
- 404: loading unit
- 500: system
- 502: input/output data
- 504: processing device
- 506: processor
- 508: storage device
- 510: machine-readable storage medium
- 512: instructions

## Claims

1. A method for providing a processing device with executable machine code, comprising:
(a) converting one or more Java class files into at least one first converted applet, CAP, file;
(b) converting the first CAP file into a functionally equivalent intermediate code and associated metadata;
(c) compiling the intermediate code to a processing device-dependent machine code;
(d) packing said processing device-dependent machine code and said associated metadata into a second CAP file;
(e) loading said second CAP file into the processing device.

2. The method of claim 1, wherein step (b) comprises identifying local variables using bytecodes and original metadata comprised in the first CAP file, and mapping said local variables to variables of said intermediate code.

3. The method of claim 1 or 2, wherein step (b) comprises mapping single bytecodes or multiple bytecodes to one or more instructions of said intermediate code.

4. The method of any preceding claim, wherein the intermediate code comprises C code.

5. The method of any preceding claim, wherein the intermediate code comprises LLVM intermediate representation, LLVM IR, code.

6. The method of any preceding claim, wherein steps (a) to (d) are performed by a modified Java Card converter.

7. The method of any preceding claim, wherein step (e) is performed by a Java Card installer.

8. The method of any preceding claim, wherein the processing device is at least one of a smart card, a secure element, and an Internet of Things device.

9. A system for providing a processing device with executable machine code, said system comprising a preloading unit and a loading unit,
wherein the preloading unit is configured to:
convert one or more Java class files into at least one first converted applet, CAP, file;
convert the first CAP file into a functionally equivalent intermediate code and associated metadata;
compile the intermediate code to a processing device-dependent machine code;
pack said processing device-dependent machine code and said associated metadata into a second CAP file;
and wherein the loading unit is configured to load said second CAP file into the processing device.

10. The system of claim 9, wherein converting the first CAP file into the intermediate code comprises identifying local variables using bytecodes and original metadata comprised in the first CAP file, and mapping said local variables to variables of said intermediate code.

11. The system of claim 9 or 10, wherein converting the first CAP file into the intermediate code comprises mapping single bytecodes or multiple bytecodes to one or more instructions of said intermediate code.

12. The system of any one of claims 9 to 11, wherein the preloading unit is a modified Java Card converter, and wherein the loading unit is a Java Card installer.

13. The system of any one of claims 9 to 12, further comprising the processing device, wherein the processing device is configured to execute a selected application and handle calls between bytecodes comprised in the first CAP file and said machine code transparently.

14. A computer program comprising executable instructions that, when executed by a processing unit, perform the method of any one of claims 1 to 8.

15. A non-transitory computer-readable medium comprising the computer program of claim 14.
